# FASCICULE DE BREVET EUROPEEN

(11) **EP 1 268 255 B1**
(45) Date de publication et mention de la délivrance du brevet: **14.01.2004**
(21) Numéro de dépôt: 01919571.8
(22) Date de dépôt: 27.03.2001
(51) Int. Cl.: B62D 1/28, B62D 15/00

(54) **PROCEDE ET DISPOSITIF POUR LA PRISE EN CHARGE DU PARCAGE EN CRENEAU DE VEHICULES MOTORISES**
VERFAHREN UND VORRICHTUNG ZUR DURCHFÜHRUNG DES LÄNGSEINPARKENS VON MOTORISIERTEN FAHRZEUGEN
METHOD AND DEVICE FOR MANAGING SLOT PARKING OF MOTOR VEHICLES

(30) Priorité: 31.03.2000 FR 0004126
(43) Date de publication de la demande: 02.01.2003
(73) Titulaire: Intellitech (Intelligent Technologies), 60200 Compiègne (FR)
(72) Inventeur: ZALILA, Zyed, F-60150 Villers sur Coudun (FR); GUEYDAN, Guillaume, F-60200 Compiègne (FR)
(74) Mandataire: Casalonga, Axel
(86) Numéro de dépôt international: PCT/FR2001/000917
(87) Numéro de publication internationale: WO 2001/074643

(56) Documents cités:
- EP-A- 0 835 796
- DE-A- 19 809 416
- DE-A- 19 922 284
- FR-A- 2 728 859
- FR-A- 2 780 936

## Description

La présente invention est relative à un procédé et un dispositif pour la prise en charge du parcage en créneau de véhicules motorisés tels que voitures, robots et chariots motorisés, dont il est possible de braquer la ou les roues sur un même essieu.

Elle trouvera son application sur la voie publique et les parkings privés pour le stationnement en créneau des véhicules et sur les sites de production des sociétés pour le parcage des véhicules qui servent par exemple au conditionnement des produits. Elle sera également mise en oeuvre par les constructeurs automobiles, les constructeurs de robots et de chariots motorisés.

Le parcage en créneau s'effectue par rapport à un environnement voisin qui se compose de murs, de bordures de trottoir, d'autres véhicules et d'autres obstacles tels que des bornes à incendie et des poteaux. Cependant, la manoeuvre s'effectue généralement pour positionner le véhicule entre deux autres véhicules de même type.

L'opération de parcage se décompose en quatre phases. La première phase est une phase de placement où le véhicule doit se positionner convenablement par rapport aux obstacles voisins, avant et arrière au véhicule.

La seconde phase est une phase de braquage où le véhicule recule et braque les roues pour permettre de pénétrer l'arrière du véhicule dans l'espace de parking où il doit être stationné.

La troisième phase du parcage en créneau est une phase de contre-braquage où le véhicule, une fois la phase de braquage terminée, c'est-à-dire une fois l'arrière du véhicule positionné convenablement dans l'espace de parking disponible, recule et contre-braque les roues pour également permettre de bien positionner la partie avant du véhicule dans l'espace de parking où il doit être stationné.

Une fois cette phase de contre-braquage achevée, la quatrième phase consiste à remettre le véhicule en ligne et pour cela, le véhicule avance ou recule selon la place avant et arrière disponible tout en redressant ses roues.

Parmi les opérateurs qui doivent réaliser ce type de parcage, c'est-à-dire les conducteurs des véhicules, certains sont plus expérimentés que d'autres et par conséquent les conducteurs ayant peu d'expérience ou étant peu adroits pour effectuer la manoeuvre doivent la recommencer plusieurs fois avant de parvenir à se stationner convenablement. Ce type d'opérateurs a donc l'inconvénient de gêner la circulation des autres véhicules le temps de la réalisation de la manoeuvre et il arrive également que ces opérateurs incompétents percutent les obstacles voisins et endommagent ceux-ci ainsi que leur propre véhicule, ce qui engage des frais de réparation par la suite et donc des frais supplémentaires d'entretien du véhicule.

De même, certains opérateurs, même compétents, engagent la manoeuvre de parcage sans se rendre réellement compte que la place de parking disponible n'est pas suffisamment grande par rapport à la taille de leur véhicule. Ces conducteurs essaient donc de se positionner dans la zone de stationnement et finissent ensuite par se trouver bloqués, en cours d'opération, n'ayant pas assez de place et risquant de heurter les obstacles voisins. En se trouvant bloqués, ces conducteurs gênent donc également le bon fonctionnement de la circulation des autres véhicules et risquent de créer des dommages aux obstacles voisins et sur leur véhicule.

Il existe pour cela des moyens qui consistent tout d'abord à s'assurer que la place disponible pour parquer le véhicule en créneau est suffisante selon le type de véhicule dont on dispose. Pour cela, il est connu des dispositifs et procédés pour l'évaluation de la place disponible qui informent le conducteur sur les possibilités d'effectuer la manoeuvre de parcage en créneau sans accrocher les obstacles voisins et en fonction de la taille de sa voiture.

En effet, le véhicule est équipé de un ou plusieurs capteurs et de moyens d'évaluation dont une première fonction est de détecter la distance qui sépare les obstacles avant et arrière du véhicule entre lesquels le conducteur souhaite se garer. Le dispositif informe ensuite l'opérateur s'il peut effectuer la manoeuvre sans aucune difficulté et sans risque d'accrocher les obstacles voisins en fonction de la taille de son véhicule.

D'autres dispositifs ont été développés pour la mise en oeuvre d'un système de prise en charge de parcage automatique sur les véhicules, tel celui décrit dans DE 198 09 416, dispositifs développés plus particulièrement sur les véhicules automobiles. Ceux-ci consistent tout d'abord à analyser la place disponible où le conducteur souhaite parquer sa voiture, puis en fonction de la place disponible, le système calcule une courbe de consigne de placement du véhicule. Lorsque cette courbe de consigne est calculée, le véhicule se positionne par action sur les roues, le sens de marche et la vitesse en suivant la courbe de consigne prédéfinie.

Cette courbe de consigne n'est plus modifiée une fois qu'elle a été calculée par le système et par conséquent, lorsque l'espace disponible évolue au cours du temps, et pendant a réalisation du parcage en créneau, le système ne prend pas en compte les différentes volutions de l'environnement et continue la manoeuvre sur la base de la courbe de consigne prédéfinie, ce qui risque d'entraîner des accrochages avec l'environnement voisin qui peut être en cours d'évolution. Par exemple, lorsque le véhicule avant ou arrière redémarre, ou lorsqu'une personne entre dans la zone de parcage, le véhicule continue quand même la nanoeuvre de parcage qu'il a entreprise.

De plus, cette courbe de consigne est basée sur des règles de calcul purement nathématiques qui ne correspondent pas exactement avec la manoeuvre naturelle qu'emploie le conducteur habituellement. Si bien que le conducteur ne se sent pas en sécurité pendant le déroulement de la manoeuvre qui est effectué différemment de ses habitudes. Du coup, le conducteur peut souhaiter interrompre la manoeuvre et reprendre le contrôle du véhicule sans avoir de raison valable de le faire, gênant de la même façon le bon fonctionnement de la circulation.

La présente invention vise à remédier aux inconvénients des systèmes existants et l'un des buts principaux est de proposer un système de prise en charge du parcage en créneau l'un véhicule mobile qui s'appuie sur des règles qualitatives graduelles basées sur l'expertise humaine, de façon à reconstituer la manoeuvre de parcage la plus proche possible de celle que l'opérateur expérimenté ou compétent aurait effectuée manuellement sans aucune assistance.

Pour cela, l'invention a pour avantage de donner des consignes d'action sur les organes de commande du véhicule qui se font au fur et à mesure de l'évolution de la manoeuvre et après avoir analysé la position qu'a atteint le véhicule par rapport à son environnement voisin, en récupérant les informations de distance, d'orientation et de sens de marche au moyen des capteurs. L'action sur les organes de commande se faisant de plus de manière qualitative tel que le ferait un opérateur en conduite manuelle qui réagit selon l'évolution des événements.

L'invention a également pour avantage de permettre une utilisation de capteurs fournissant des mesures peu précises, soit parce que ces capteurs sont de qualité moyenne et de faible coût, soit parce que les capteurs sont complexes au niveau de leur mise au point. En effet, les données transmises n'ont pas nécessairement besoin d'être très précises puisqu'elles sont ensuite transformées en données qualitatives graduelles.

De plus, l'invention a pour avantage de vérifier, pendant l'opération de parcage du véhicule, si l'environnement voisin au véhicule n'a pas évolué par rapport au début de la manoeuvre. En effet, la position du véhicule par rapport à l'environnement voisin est mesurée en cours d'évolution de la manoeuvre et dans le cas où un obstacle supplémentaire, par exemple une personne, venait à entrer dans la zone de parcage, le système le détecte et réagit instantanément soit en rectifiant la manoeuvre, si celle-ci reste réalisable, soit en interrompant le parcage en créneau si la distance entre l'obstacle supplémentaire et le véhicule est estimée trop dangereuse.

L'invention a également pour avantage d'avoir beaucoup de souplesse quant au choix et à la définition des règles qualitatives graduelles qui s'appuient sur l'expertise et l'expérience humaines. En effet, le choix de ces règles peut être très large et a pour conséquence directe, selon la complexité ou la simplicité choisie, d'augmenter ou de diminuer le nombre de consignes d'action sur les roues, le sens de marche et la vitesse du véhicule.

Un autre avantage de la présente invention est de permettre à l'opérateur de reprendre le contrôle du véhicule à tout instant, simplement en manipulant les organes de commande du véhicule tels que le volant, la pédale de frein ou la boîte de vitesse, ce qui améliore le sentiment de bien-être et de sécurité du conducteur qui peut interrompre la manoeuvre s'il estime nécessaire de le faire ou s'il souhaite changer de place au dernier moment.

Un autre but de la présente invention est de sécuriser l'opérateur au cours de la manoeuvre de parcage. Pour cela, l'invention a pour avantage d'informer directement l'opérateur si ce dernier le souhaite sur les actions à effectuer sur les organes de contrôle du véhicule. Dans ce cas, l'opérateur joue directement le rôle d'actionneur et est commandé par les informations reçues visuellement, auditivement: ou kinesthésiquement (aspect tactile). On entend par kinesthésique le fait d'informer le conducteur par des actions sensitives sur les mains, les pieds ou toute autre partie du corps en contact physique avec l'intérieur du véhicule.

La présente invention est relative à un procédé de prise en charge du parcage en créneau d'un véhicule mobile utilisable pour parquer tout type de véhicule motorisé, dont on peut braquer les roues d'un même essieu, par rapport à l'environnement voisin pouvant se trouver sur la voie publique, les parkings privés et les sites de production des entreprises, ledit parcage en créneau se composant d'au moins deux phases à savoir une phase de braquage et une phase de contre-braquage, et éventuellement de deux autres phases, à savoir une phase de placement qui précède les deux phases de braquage et contre-braquage et une phase de remise en ligne qui suit la phase de contre-braquage, ledit procédé utilisant des capteurs de mesure de distance, d'orientation et de vitesse qui permettent d'évaluer la place disponible par rapport à l'environnement voisin pour effectuer la manoeuvre de parcage, celle-ci se faisant par action sur la vitesse, le sens de marche et le braquage relatif des roues du véhicule,
caractérisé par le fait que pour réaliser le parcage :
- on récupère les données d'entrée provenant des capteurs de mesure qui fournissent des valeurs quantitatives,
- on traduit certaines de ces valeurs d'entrée quantitatives en valeurs d'entrée qualitatives graduelles,
- on décide sur la base de règles qualitatives des consignes d'action qui fournissent des données de sortie qualitatives graduelles et des données de sortie quantitatives,
- on transforme ces données de sortie qualitatives graduelles en données de sortie quantitatives,
- on commande les actionneurs du véhicule en fonction des données de sortie quantitatives obtenues.

Elle fait également référence au dispositif pour la prise en charge du parcage en créneau d'un véhicule mobile qui met en oeuvre le procédé, caractérisé par le fait qu'il comprend :
- des capteurs de mesure de distance du véhicule par rapport aux obstacles environnants, des capteurs de vitesse, des capteurs de sens de marche et des capteurs d'orientation du véhicule,
- un calculateur qui récupère les données quantitatives des capteurs de mesure et transforme les données d'entrée en valeurs qualitatives graduelles et en valeurs quantitatives, traite et décide des consignes de sortie qui ont des valeurs qualitatives graduelles et des valeurs quantitatives et transforme ces consignes de sortie en valeurs quantitatives,
- des actionneurs qui agissent sur les mouvements du véhicule en fonction des valeurs de sortie quantitatives transmises par le calculateur, ou une interface de sortie qui transmet des informations visuelles et/ou sonores et/ou kinesthésiques au conducteur pour le guider dans sa manoeuvre.

L'invention sera mieux comprise à la lecture de la description suivante qui s'appuie sur les figures explicatives, à savoir :
- la figure 1 qui présente un algorithme de fonctionnement du système et de son environnement,
- les figures 2. 3, 4, 5 et 6 qui présentent les différentes phases d'un parcage en créneau.
- la figure 7 qui présente un algorithme de fonctionnement du procédé de parcage en créneau en lui-même,
- la figure 8 qui présente un exemple d'implantation de capteurs sur le véhicule,
- la figure 9 qui présente l'architecture du système implanté sur un véhicule,
- les figures 10a, 10b, 10c et 10d qui présentent un cas de décision des consignes d'action de sortie.

La présente invention est relative à un procédé et dispositif pour la prise en charge de parcage en créneau d'un véhicule mobile (1), on entend par véhicule (1) tout véhicule motorisé dont on peut braquer les roues appartenant à un même essieu comme par exemple les véhicules automobiles qui circulent sur la voie publique ou privée et qui doivent être parqués en créneau dans une zone de parcage (2) par rapport à un environnement voisin (3) qui se constitue, dans ce cas et par exemple, de voitures (3), de murs, d'arbres, de poteaux, de bordures de trottoir et de bornes à incendie.

D'autres exemples de véhicules mobiles (1) sont les robots et chariots motorisés qui servent sur les sites de production pour le conditionnement et le stockage des produits et qui doivent se positionner de façon bien précise en effectuant une manoeuvre en créneau par rapport à un environnement voisin (3) pour positionner les produits convenablement à l'endroit voulu. Dans ce cas et par exemple, l'environnement voisin se compose de machines de production, d'armoires et d'étagères de stockage, de murs et d'autres véhicules mobiles du même type.

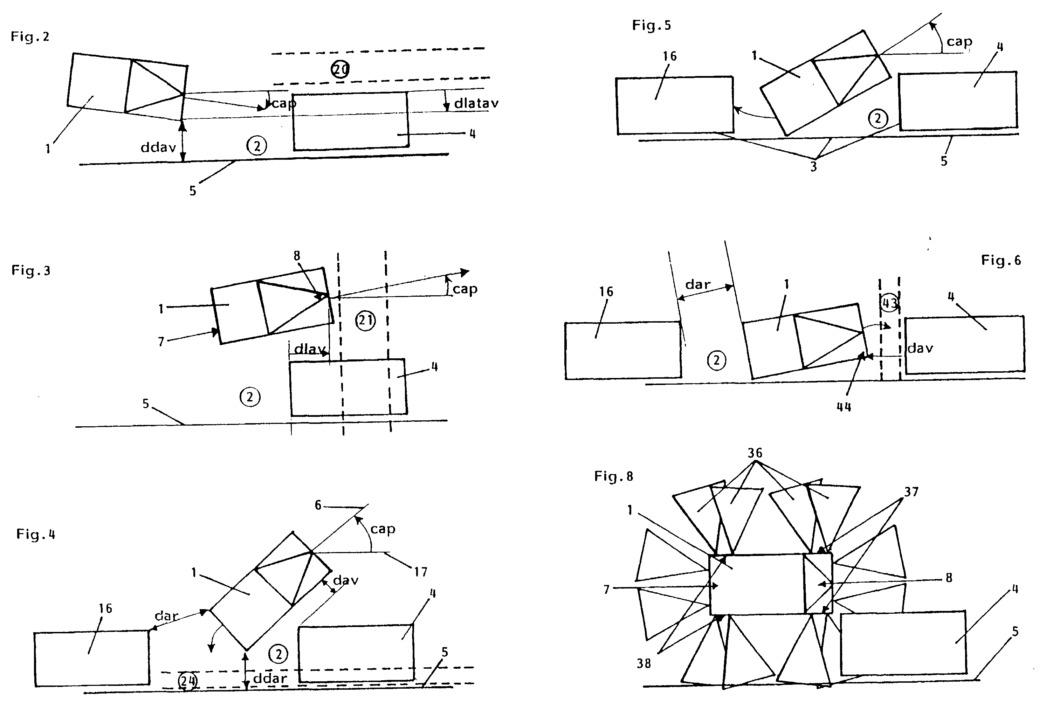

La manoeuvre de parcage en créneau du véhicule (1) par rapport à son environnement (3) se décompose en quatre phases qui sont le placement, le braquage, le contre-braquage et la remise en ligne, telles que représentées aux figures 2, 3, 4, 5 et 6.

Lors de la première phase de placement, le véhicule (1) doit tout d'abord se positionner convenablement par rapport à l'obstacle avant (4). Pour cela. le véhicule doit se positionner à la fois latéralement et longitudinalement par rapport à l'obstacle, par exemple un autre véhicule. Pour le placement latéral, tel que présenté à la figure 2. le véhicule doit se trouver à une distance satisfaisante (20) de l'obstacle avant (4) en étant le plus parallèle possible au bord (5) de la zone de parcage. Et pour le placement longitudinal, tel que présenté en figure 3 le véhicule doit se positionner à une distance satisfaisante (21) en avant de la zone de parcage relevée.

Pour la seconde phase de braquage, telle que présentée en figure 4, l'arrière du véhicule (1) pénètre dans la zone de parcage (2) et se rapproche du bord (5) de la zone de parcage par exemple la bordure d'un trottoir ou la surface d'un mur. Durant cette phase de braquage, le véhicule recule et braque les roues pour entrer dans la zone de parcage et se rapprocher du bord de la zone de parcage, et se retrouve donc orienté dans un axe (6) différent de celui du bord (5) de la zone de parcage.

La troisième phase de contre-braquage, qui est présentée en figure 5, intervient lorsque la phase de braquage est suffisamment avancée et que l'arrière (7) du véhicule (1) atteint une distance satisfaisante (24) par rapport au bord (5) de la zone de parcage. Alors le véhicule doit contre-braquer les roues tout en continuant de reculer afin de pénétrer également la partie avant (8) du véhicule dans la zone de parcage (2).

La quatrième phase de remise en ligne, présentée en figure 6, consiste à remettre le véhicule (1) bien parallèlement par rapport au bord (5) de la zone de parcage, ainsi que les roues du véhicule, une fois que la troisième phase de contre-braquage est achevée, c'est-à-dire lorsque le véhicule (1) est entré complètement dans la zone de parcage.

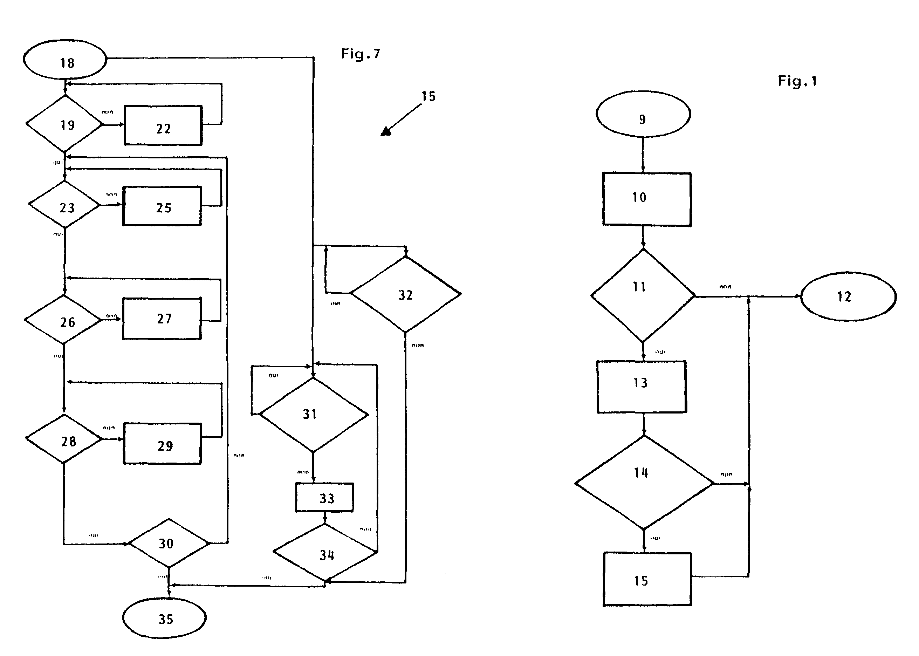

La prise en charge du parcage en créneau intervient une fois que le conducteur enclenche le procédé, ce qui correspond au début (9) de l'algorithme de fonctionnement du système présenté en figure 1. La première phase consiste tout d'abord à évaluer si la place de parking disponible est suffisamment grande comparée à la taille du véhicule.

Pour cela, on doit évaluer la place (10) disponible pour parquer le véhicule à l'endroit choisi par l'opérateur. Une fois la place disponible évaluée (10), on vérifie que cette place est suffisante (11) pour le véhicule et tout au long de la manoeuvre, on s'assure que cette place reste suffisante par un test de sécurité (32).

De nombreuses méthodes ont déjà été développées pour évaluer la distance qui sépare deux obstacles entre lesquels le conducteur souhaite parquer son véhicule, comme par exemple mesurer la distance entre l'arrière du véhicule (7) et l'obstacle arrière (16) et la distance entre l'avant du véhicule (8) et l'obstacle avant (4) au moyen de capteurs (36) de type infrarouge, laser ou ultrason, et en fonction des distances mesurées, valider ou non la possibilité de parquer le véhicule.

Un autre exemple consiste à comparer la distance qui sépare les deux obstacles avant (4) et arrière (16) à la taille du véhicule (1). Dans ce cas, la distance est par exemple mesurée au moyen d'une caméra qui analyse les zones d'ombrage correspondant aux obstacles par rapport à la zone éclaircie correspondant à la place de parking vide.

Ensuite, lorsque la place a été évaluée, soit cette place disponible n'est pas suffisamment grande par rapport à la taille du véhicule et dans ce cas on achève (12) le parcage du véhicule. Soit la place de parking est suffisante et dans ce cas, on demande confirmation (13) à l'opérateur pour prendre en charge le parcage en créneau et on teste (14) la réponse de confirmation de l'opérateur. Si la confirmation est "NON" alors on achève (12) le parcage en créneau et si la réponse est "OUI", alors on réalise le parcage (15) en créneau du véhicule. Ensuite, lorsque le parcage est terminé, on achève (12) la prise en charge du parcage en créneau.

Le véhicule est équipé de capteurs (36) de mesure de distance entre le véhicule mobile (1) et les obstacles environnants (3), de capteurs de mesure d'orientation du véhicule pour déterminer l'angle entre l'axe (6) du véhicule et l'axe (17) parallèle au bord (5) de la route, de capteurs de mesure du sens de marche du véhicule et de capteurs de mesure de vitesse. L'ensemble de ces capteurs (36) fournit des mesures quantitatives fixes, par exemple une valeur quantitative binaire comme avancer ou reculer ou encore 0 ou 1, et d'autres fournissant une valeur quantitative variable, en particulier les mesures de distance et d'orientation.

Lorsque la phase d'évaluation (10) de la place disponible est validée, c'est-à-dire qu'il est possible de parquer le véhicule en créneau, et que l'opérateur a confirmé (13) son désir de stationner le véhicule en créneau, l'opération de parcage peut alors avoir lieu et on procède par conséquent de la manière suivante pour réaliser le parcage en créneau :
- on récupère les données d'entrée provenant des capteurs de mesure qui fournissent des valeurs quantitatives,
- on traduit et transforme certaines de ces valeurs d'entrée quantitatives en valeurs d'entrée qualitatives graduelles, encore appelées valeurs floues, les autres données d'entrée conservant leur valeur quantitative,
- on traite et on décide sur la base de règles qualitatives. encore appelées règles floues, des consignes d'action qui fournissent des données de sortie qualitatives graduelles et des données de sortie quantitatives,
- on transforme ces données de sortie qualitatives graduelles en données de sortie quantitatives, les autres données de sortie quantitatives conservant leur valeur,
- on commande les actionneurs du véhicule en fonction des données de sortie quantitatives obtenues.

L'opération de parcage s'effectue en temps réel, c'est à dire que l'on récupère les données d'entrée des capteurs à chaque instant et on commande les actionneurs également à chaque instant durant toute l'évolution de la manoeuvre de parcage en créneau.
Pour cela, on effectue une mesure des capteurs à une période très faible, par exemple toutes les 10ms et on commande également les actionneurs du véhicule toutes les 10ms, après avoir décidé des consignes d'action.

Ainsi, durant toute l'opération de parcage, on évalue à chaque instant la position et le mouvement du véhicule par rapport aux obstacles environnants, et on agit sur les actionneurs du véhicule également à chaque instant, en temps réel, en cours d'évolution de la manoeuvre de parcage, lesdits actionneurs contrôlant la vitesse, le sens de marche et le braquage relatif des roues du véhicule, c'est à dire qu'on contrôle la position et le mouvement du véhicule par rapport aux obstacles voisins pour réaliser le parcage en créneau.

De cette façon, la manoeuvre s'effectue telle qu'un opérateur expérimenté l'aurait effectuée manuellement sans aucune assistance.

Les décisions prises par le système de prise en charge du parcage sont transmises aux actionneurs du véhicule (1) pour qu'ils contrôlent directement la vitesse, le sens de marche et le braquage des roues du véhicule, ou à l'opérateur via l'interface de sortie (41) pour l'informer sur les actions qu'il doit effectuer sur la pédale d'accélérateur, de frein et d'embrayage, sur la boîte de vitesse et sur le volant.

Les données de mesure sur les distances et l'orientation du véhicule par rapport aux obstacles que l'on récupère sont dans un mode préférentiel mais non limitatif celles présentées aux figures 2, 3, 4, 5 et 6, à savoir :
- la distance droite avant (ddav) qui correspond à la distance séparant l'avant droit du véhicule du bord de la zone de parcage ou de l'obstacle en bordure (5) duquel on souhaite se garer. La valeur que fournit cette distance droite avant est une valeur quantitative que l'opérateur peut apprécier visuellement.
- la distance droite arrière (ddar) qui correspond à la distance séparant l'arrière droit du véhicule du bord de la zone de parcage ou de l'obstacle en bordure duquel on souhaite se garer. Cette distance droite arrière est une valeur appréciable par l'opérateur.
- le cap du véhicule (cap) qui représente l'orientation du véhicule par rapport à l'obstacle à côté duquel on souhaite garer le véhicule. La valeur obtenue est une valeur quantitative que l'opérateur peut apprécier lors de l'évolution de la manoeuvre de parcage.
- la distance par rapport au véhicule avant (dav) qui représente l'espace entre le véhicule (1) et l'arrière de l'obstacle garé devant la zone de parcage.
- la distance longitudinale par rapport au véhicule avant (dlav) mesurée dans l'axe du parcage.
- la distance longitudinale relative par rapport à la consigne de position longitudinale (dlavr) qui est égale à la distance longitudinale par rapport au véhicule avant moins la moitié de la longueur de l'intervalle de consigne de position longitudinale (21).
- la distance latérale par rapport au véhicule avant (dlatav) qui est une distance latérale perpendiculaire à l'axe du parcage.
- la distance latérale relative par rapport à la consigne de position latérale (dlatavr) qui est égale à la distance latérale par rapport au véhicule avant moins la moitié de l'intervalle de consigne de position latérale (20).

On récupère également des données de mesure sur le sens de marche du véhicule. La mesure du sens de marche fournit une valeur quantitative fixe qui est soit marche avant, marche arrière ou point mort.

On récupère également des résultats de test qui ont une valeur binaire qui est soit 0 ou validé, soit 1 ou non validé.

De toutes les valeurs récupérées, on conserve les valeurs quantitatives fixes et/ou binaires telles qu'elles sont et on transforme les valeurs quantitatives variables en valeurs qualitatives graduelles.

Ces valeurs qualitatives graduelles correspondent à l'appréciation qu'aurait un opérateur sur sa position, son orientation et sa vitesse, comme par exemple avancer ou reculer très vite, vite, lentement ou très lentement, ou encore position très éloignée, éloignée, proche ou très proche d'un obstacle, de même véhicule fort ou peu incliné par rapport au bord de la zone de parcage.

Une fois que l'on a transformé ces données d'entrée quantitatives en données d'entrée qualitatives graduelles et en données quantitatives fixes et/ou binaires, on traite et on décide alors, sur la base de règles qualitatives non linéaires, des consignes d'action sur le véhicule, ces consignes d'action correspondant à des valeurs quantitatives fixes et/ou binaires et à des valeurs qualitatives graduelles qu'il convient alors de transformer ensuite en valeurs quantitatives pour commander les actionneurs du véhicule.

Le traitement de l'information s'effectue en temps réel, c'est à dire que l'on récupère les données des capteurs et on traite et décide des consignes d'action à chaque instant dans le temps pour analyser toute l'évolution de la manoeuvre par rapport à son environnement et agir en même temps sur le véhicule selon les circonstances.

La figure 7 présente dans le détail l'algorithme de fonctionnement de l'opération de parcage (15) en créneau d'un véhicule (1). Lorsque la place disponible a été validée et que l'opérateur a confirmé son souhait de parquer le véhicule, le début (18) du parcage est alors activé et lance deux opérations en simultané, la première opération consistant à réaliser le parcage et la seconde à effectuer des tests de sécurité en parallèle au parcage.

La première opération, c'est à dire la réalisation du parcage, se décompose dans un mode préférentiel mais non limitatif en quatre phases qui sont le placement, le braquage, le contre-braquage et la remise en ligne, le passage d'une phase à une autre ne pouvant se produire que si la position du véhicule dans chacune des phases est estimée suffisante et validée par test.

Dans la première phase de placement, on effectue un premier test (19) que l'on appellera ensuite "test 1 ", qui permet d'évaluer la position longitudinale et la position transversale du véhicule pendant la phase de placement. Ce test 1 porte sur les variables distance latérale par rapport au véhicule avant (dlatav), distance longitudinale par rapport au véhicule avant (dlav) et le cap du véhicule (cap) qui doivent être comprises respectivement dans un intervalle [α₁ α₂] (en mètre) de consigne de position latérale (20), un intervalle [β₁ β₂] (en mètre) de consigne de position longitudinale (21) et un intervalle [ω₁ ω₂] (en radian) de consigne d'orientation. Le premier test 1 (19) est validé lorsque ces trois conditions ci-dessus sont remplies. Sinon, le test 1 n'est pas validé.

Si le test 1 n'est pas validé, on réalise alors le placement (22) et on réitère cette opération jusqu'à ce que le test 1 soit validé, après quoi on passe à la seconde phase de braquage.

Dans la seconde phase de braquage, on effectue un second test (23) appelé dans la suite du texte "test 2" qui permet d'évaluer la position de l'arrière du véhicule (7) au bord (5) de la zone de parcage. par exemple un trottoir ou un mur, pendant la phase de braquage. Ce test 2 (23) porte sur la variable distance droite arrière (ddar) qui doit être comprise dans un intervalle [γ₁ γ₂] (en mètre) de consigne de position arrière (24). Ce second test 2 est validé lorsque cette condition est remplie. Sinon, le test 2 n'est pas validé.

Lorsque le test 2 n'est pas validé, on réalise alors le braquage (25) et on réitère cette opération jusqu'à ce que le test 2 soit validé, après quoi on passe à la troisième phase de contre-braquage.

Pour la troisième phase de contre-braquage, on effectue un troisième test (26) que l'on appellera ensuite "test 3" (26) qui permet d'évaluer l'orientation du véhicule pendant la phase de contre-braquage. Ce test 3 porte sur la variable cap du véhicule (cap) qui doit être comprise dans un intervalle [δ₁ δ₂] (en radian) de consigne d'orientation du véhicule. Ce test 3 est validé lorsque la condition est remplie. Lorsque le test 3 n'est pas validé, on réalise le contre-braquage (27) et on réitère cette opération (27) jusqu'à ce que le test 3 soit validé, après quoi on passe à une quatrième phase de remise en ligne.

Pour la quatrième phase de remise en ligne, on effectue un quatrième test (28) que l'on appellera ensuite "test 4", qui permet d'évaluer la distance aux autres véhicules ainsi que l'orientation du véhicule pendant la phase de remise en ligne. Ce test 4 porte sur les variables distance par rapport au véhicule avant (dav), distance par rapport au véhicule arrière (dar) et cap du véhicule (cap) qui doivent respectivement être comprises dans un intervalle [κ₁ κ₂] (en mètre) de consigne de position au véhicule avant (43), être supérieure à une valeur ε (en mètre) de consigne de position au véhicule arrière, et être comprise dans un intervalle [η₁ η₂] (en radian) de consigne d'orientation presque nulle. Ce test 4 est validé si les trois conditions ci-dessus sont vraies, c'est à dire comprises dans les intervalles définis. Tant que le test 4 n'est pas validé, on réalise la remise en ligne (29) et on réitère cette opération jusqu'à ce que le test 4 soit validé, après quoi on passe à un cinquième test de contrôle (30) que l'on appellera ensuite "test 5".

Ce test 5 permet d'évaluer la distance au bord (5) de la zone de parcage (2) ainsi que l'orientation du véhicule une fois que la phase de remise en ligne est achevée. Ce test 5 est un test de fin de manoeuvre et il est validé lorsque le véhicule est convenablement garé. Pour cela, le test 5 porte sur la variable distance droite avant (ddav) et cap du véhicule (cap) qui doivent respectivement être comprises dans un intervalle [λ₁ λ₂] (en mètre) de consigne de position latérale de parcage et comprises dans un intervalle [ϕ₁ϕ₂] (en radian) de consigne d'orientation nulle et il est validé lorsque ces deux conditions sont remplies. Si le test 5 est validé, on achève (35) alors l'opération de parcage (15) sinon on réitère les trois phases de braquage, de contre-braquage et de remise en ligne, jusqu'à validation du test 5.

La seconde opération qui consiste à réaliser des tests de sécurité en parallèle de la réalisation du parcage permet de garantir le bon déroulement de la manoeuvre et d'éviter les risques d'accident avec les obstacles environnants.

Pour cela, deux tests de sécurité sont réalisés en simultané. Le premier test de sécurité (31) appelé ensuite test de sécurité 1 permet d'évaluer les actions d'un opérateur éventuel sur les organes de commande du véhicule (1), comme par exemple la pédale d'embrayage, de frein et d'accélérateur, le volant et la boîte de vitesse. Tant que le test de sécurité 1 est validé, c'est à dire que l'opérateur ne manipule aucun des organes de commande du véhicule, on réitère ce test de sécurité 1 tout en continuant la réalisation du parcage. Inversement, si le test de sécurité 1 n'est pas validé, c'est à dire que l'opérateur a manipulé l'un des organes de commande du véhicule, alors on demande validation (33) à l'opérateur de son désir de reprendre le contrôle manuel du véhicule et on teste cette validation d'arrêt (34). Si le test de validation d'arrêt (34) est validé, alors on achève (35) l'opération de parcage (15).

Le second test de sécurité (32), appelé ensuite "test de sécurité 2", permet d'évaluer la distance séparant le véhicule des obstacles délimitant la zone de parcage. Ce test n'est pas validé si l'une de ces distances est jugée dangereuse pour la suite des opérations, comme par exemple lors d'un déplacement imprévisible et dangereux de l'un des obstacles ou encore dans le cas d'une défaillance de l'un des capteurs. Dans ce cas, on achève (35) l'opération de parcage (15). Dans le cas contraire où le test de sécurité 2 est validé, on poursuit la réalisation du parcage normalement.

La réalisation du placement (22) s'effectue en gérant simultanément la position latérale du véhicule et la position longitudinale du véhicule. Pour gérer la position latérale du véhicule, on procède de la manière suivante :
- on contrôle la position latérale du véhicule en récupérant quatre données d'entrée, obtenues à partir des mesures des capteurs. deux données d'entrée prenant une valeur quantitative, à savoir le sens de marche et le résultat du test 1, et les deux autres données d'entrée prenant une valeur qualitative graduelle, à savoir le cap du véhicule (cap) et la distance latérale relative par rapport à la consigne de position latérale (dlatavr),
- on traite et décide sur la base de règles qualitatives de la consigne d'action de braquage des roues qui prend une valeur qualitative graduelle que l'on traduit et transforme ensuite en valeur quantitative,
- on agit sur le braquage des roues en fonction de la valeur quantitative obtenue.

Simultanément, pour gérer la position longitudinale du véhicule lors de l'opération de placement, on procède de la manière suivante :
- on contrôle la position longitudinale du véhicule en récupérant trois données d'entrée, obtenues à partir des mesures des capteurs, deux données d'entrée prenant une valeur quantitative, à savoir le résultat du test 1 et le sens de marche, et une donnée d'entrée prenant une valeur qualitative graduelle à savoir la distance longitudinale relative (dlavr),
- on traite et décide alors sur la base de règles qualitatives des consignes d'action sur la vitesse et le sens de marche qui prennent toutes les deux une valeur quantitative,
- on agit sur la vitesse et le sens de marche en fonction de ces deux valeurs quantitatives obtenues.

La réalisation du braquage (25) s'effectue lorsque la première phase de placement est achevée. Pour réaliser ce braquage, on procède donc de la manière suivante :
- on contrôle le braquage en récupérant trois données d'entrée, obtenues à partir des mesures des capteurs, une donnée d'entrée prenant une valeur quantitative, à savoir le test 2, et deux données prenant une valeur qualitative graduelle, à savoir le cap du véhicule (cap) et la distance droite arrière par rapport au bord de la zone de parcage (ddar),
- on traite et décide alors sur la base de règles qualitatives des consignes d'action sur la vitesse et le sens de marche qui prennent une valeur quantitative, et sur le braquage des roues qui prend une valeur qualitative graduelle que l'on traduit et transforme en valeur quantitative,
- on agit sur la vitesse, le sens de marche et le braquage des roues du véhicule en fonction des valeurs quantitatives obtenues.

La réalisation du contre-braquage (27) intervient dans la troisième phase de contre-braquage lorsque la seconde phase de braquage est terminée. Pour réaliser ce contre-braquage, on procède donc de la manière suivante:
- on contrôle le contre-braquage en récupérant quatre données d'entrée, obtenues à partir des mesures des capteurs, deux données d'entrée prenant une valeur quantitative, à savoir le résultat du test 3 et le sens de marche, et deux données prenant une valeur qualitative graduelle à savoir le cap du véhicule (cap) et la distance au véhicule arrière (dar),
- on traite et décide sur la base de règles qualitatives des consignes d'action sur la vitesse et le sens de marche qui prennent une valeur quantitative et sur le braquage des roues qui prend une valeur qualitative graduelle que l'on traduit et transforme en valeur quantitative,
- on agit sur la vitesse, le sens de marche et le braquage des roues du véhicule en fonction des valeurs quantitatives obtenues.

La réalisation de la remise en ligne (29) intervient dans la quatrième phase de remise en ligne lorsque la troisième phase est terminée. La réalisation de la remise en ligne s'effectue en gérant simultanément la position latérale et la position longitudinale du véhicule. Pour gérer la position longitudinale du véhicule, on procède de la manière suivante :
- on contrôle la position longitudinale en récupérant quatre données d'entrée obtenues à partir des mesures de capteurs, deux données d'entrée prenant une valeur quantitative à savoir le résultat du test 4 et le sens de marche du véhicule et deux données d'entrée prenant une valeur qualitative graduelle à savoir la distance au véhicule arrière (dar) et la distance au véhicule avant (dav),
- on traite et décide alors sur la base de règles qualitatives des consignes d'action sur la vitesse et le sens de marche qui prennent toutes les deux une valeur quantitative,
- on agit sur la vitesse et sur le sens de marche en fonction de ces deux valeurs quantitatives de sortie obtenues.

Simultanément, pour gérer la position latérale du véhicule lors de l'opération de remise en ligne, on procède de la manière suivante :
- on contrôle la position latérale du véhicule en récupérant trois données d'entrée obtenues à partir des mesures de capteurs, deux données d'entrée prenant une valeur quantitative à savoir le sens de marche et le résultat du test 4, et l'autre donnée d'entrée prenant une valeur qualitative graduelle à savoir le cap du véhicule,
- on traite et décide sur la base de règles qualitatives de la consigne d'action du braquage des roues qui prend une valeur qualitative graduelle que l'on traduit et transforme ensuite en valeur quantitative,
- on agit sur le braquage des roues du véhicule en fonction de la valeur quantitative de sortie obtenue.

Pour chacune des phases, la consigne d'action sur la vitesse prend une valeur quantitative. Dans un mode préférentiel mais non limitatif, la consigne d'action sur la vitesse peut prendre trois valeurs quantitatives, ces valeurs correspondant à la vitesse nulle, à une vitesse faible et à une vitesse moyenne, ces vitesses étant exprimées en mètre par seconde.

De même, la consigne d'action sur le sens de marche prend une valeur quantitative. Cette valeur est soit marche avant, soit marche arrière, soit point mort.

Quant à la consigne d'action sur le braquage des roues, celle-ci prend une ou plusieurs valeurs qualitatives graduelles que l'on traduit ensuite par une seule valeur quantitative correspondant à un angle de braquage des roues.

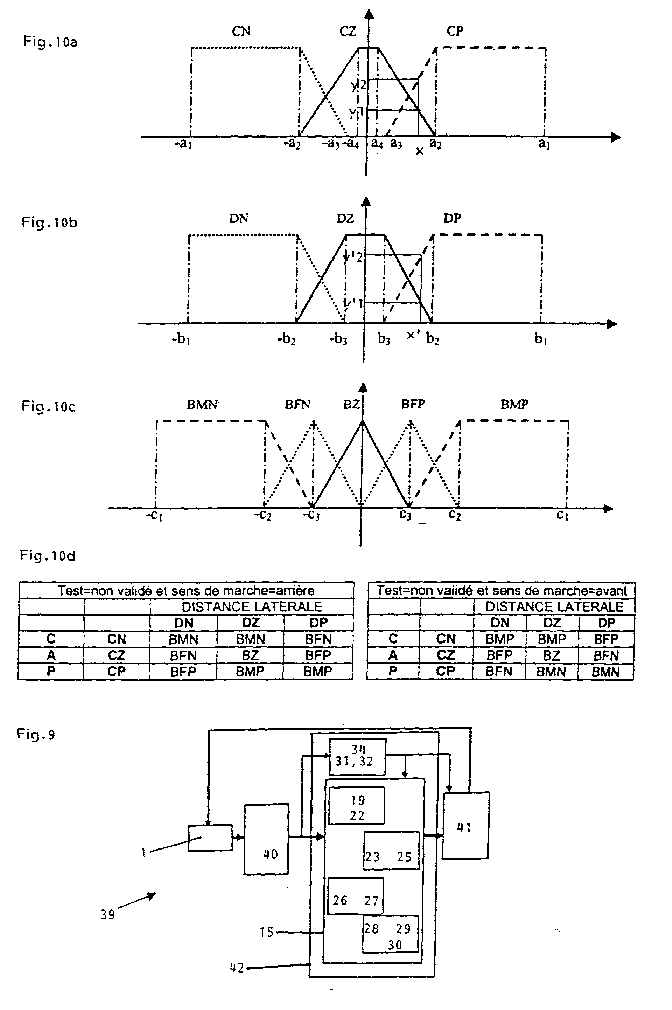

Les figures 10a, 10b, 10c et 10d présentent plusieurs graphes ou tableaux qui vont permettre d'expliquer la manière dont on réalise le placement, le braquage, le contre-braquage et la remise en ligne. Pour les figures présentées ici, il s'agit de réaliser le placement et en particulier décider de la consigne d'action pour réaliser le positionnement latéral du véhicule. Mais la méthode reste la même pour la réalisation de la position longitudinale dans l'opération de placement et pour la réalisation des opérations de braquage, de contre-braquage et de remise en ligne, les variables d'entrée et de sortie ainsi que les règles qualitatives de décision étant modifiées en fonction des critères de choix des consignes d'action.

Pour l'opération de placement du véhicule, on contrôle simultanément la position latérale du véhicule et la position longitudinale. En ce qui concerne la position latérale du véhicule, quatre données d'entrée sont récupérées, deux d'entre elles sont des données quantitatives qui conservent leur valeur telle quelle, à savoir le sens de marche qui prend la valeur marche avant, marche arrière ou point mort qui est par exemple quantifiée par -1, 0 et 1 ou négatif, zéro, positif, et le test 1 qui est validé ou non validé ou peut être quantifié par exemple par les valeurs 0 ou 1. Les deux autres données d'entrée, à savoir le cap du véhicule (cap) et la distance latérale relative (dlatavr), sont les données quantitatives que l'opérateur peut plus ou moins apprécier, approximer et sont donc traduites et transformées en données qualitatives graduelles qu'il convient donc de déterminer.

Pour cela, la figure 10a présente un graphe de partitionnement de l'entrée cap du véhicule (cap) qui permet de passer de la valeur quantitative vers une ou plusieurs valeurs qualitatives graduelles. Le graphe de partitionnement de la figure 10a qui est un mode préférentiel mais non limitatif présente en abscisse une valeur quantitative du cap du véhicule dont l'unité est par exemple le radian, c'est-à-dire la mesure obtenue directement à partir des capteurs du véhicule. Il présente en ordonnée différentes valeurs qualitatives graduelles que peut prendre le cap du véhicule (cap). Ces valeurs correspondent à l'appréciation qu'auraient un ou plusieurs opérateurs quant à l'orientation du véhicule.

Par exemple, on définit un cap négatif (CN) du véhicule par l'intervalle graduel, encore appelé intervalle flou [-a₁ -a₁ -a₂ -a₃] (en radian). Lorsque la valeur quantitative du cap se trouve dans l'intervalle [-a₁ -a₂] (en radian), le cap est qualifié de négatif avec un degré de 1, lorsqu'elle se trouve dans l'intervalle [-a₂ -a₃], le cap est qualifié de négatif avec un degré dégressif s'annulant au delà de -a₃.

De même, on définit un cap nul (CZ) par l'intervalle graduel [-a₂ -a₄ a₄ a₂] (en radian), le cap étant qualifié de nul avec un degré progressif sur l'intervalle [-a₂ -a₄] avec un degré de 1 sur l'intervalle [-a₄ a₄] et avec un degré dégressif sur l'intervalle [a₄ a₂].

On définit également le cap positif (CP) par l'intervalle graduel [a₃ a₂ a₁ a₁] (en radian). Lorsque la valeur quantitative du cap se trouve dans l'intervalle [a₂ a₁], le cap est qualifié de positif avec un degré de 1. Lorsqu'elle se trouve dans l'intervalle [a₃ a₂], le cap est qualifié de positif avec un degré progressif prenant la valeur 1 en a₂.

Par exemple, pour une valeur du cap du véhicule égale à x présentée sur la figure 10a, le cap prend donc pour valeur qualitative graduelle y₁ cap nul et y₂ cap positif, y₁ et y₂ étant des degrés compris entre 0 et 1 et correspondent à l'appréciation qu'aurait un conducteur de l'orientation de son véhicule, c'est-à-dire cap + ou - droit ou cap + ou - incliné dans un sens.

Le graphe de partitionnement de l'entrée distance latérale relative (dlatavr) qui se trouve à la figure 10b présente en abscisse la valeur quantitative (en mètre) fournie par les mesures des capteurs, et en ordonnée la ou les valeurs qualitatives graduelles que prend la donnée d'entrée (dlatavr).

Ainsi, on définit qualitativement la distance latérale relative (dlatavr) comme une distance latérale négative (DN) par l'intervalle graduel [-b₁ -b₁ -b₂ -b₃] (en mètre). Lorsque la valeur quantitative de la distance latérale relative se trouve dans l'intervalle [-b₁ -b₂], celle-ci est qualifiée de négative avec un degré de 1. Lorsque la valeur quantitative se trouve dans l'intervalle [-b₂ -b₃], la distance latérale relative est qualifiée de négative avec un degré dégressif s'annulant au delà de -b₃.

De même, on définit une distance latérale relative nulle (DZ) par l'intervalle graduel [-b₂ -b₃ b₃ b₂] (en mètre), la distance latérale relative (dlatavr) étant qualifiée de nulle avec un degré progressif sur l'intervalle [-b₂ -b₃], avec un degré de 1 sur l'intervalle [-b₃ b₃] et avec un degré dégressif sur l'intervalle [b₃ b₂].

On définit également une distance latérale relative positive (DP) par l'intervalle graduel [b₃ b₂ b₁ b₁] (en mètre). Lorsque la valeur quantitative de la distance latérale relative (dlatavr) se trouve dans l'intervalle [b₂ b₁], celle-ci est qualifiée de positive avec un degré de 1. Lorsque la valeur se trouve dans l'intervalle [b₃ b₂], la distance latérale relative est qualifiée de positive avec un degré progressif prenant la valeur 1 en b₂.

Par exemple, pour une valeur quantitative de la distance latérale relative (dlatavr) égale à x' (en mètre), on obtient deux valeurs qualitatives graduelles de la distance latérale relative (dlatavr) égale à y'₁ distance latérale nulle et y'₂ distance latérale positive où y'₁ et y'₂ sont des degrés compris entre 0 et 1.

Ces valeurs correspondent à l'appréciation qu'aurait un opérateur de la distance latérale relative (dlatavr), à savoir le bord droit (44) du véhicule se trouve + ou - à la médiane de la consigne de position latérale (20) et le bord droit (44) se trouve + ou - au-dessus de la médiane de la consigne de position latérale (20).

Une fois que les valeurs d'entrée qualitatives graduelles sont déterminées, on traite et décide des consignes de sortie qui, dans le cas du positionnement latéral, est le braquage relatif des roues du véhicule qui prend également une ou plusieurs valeurs de sortie qualitatives graduelles.

Ces valeurs de sortie qualitatives graduelles de l'angle de braquage relatif sont définies de la manière suivante :
- un angle de braquage moyen négatif (BMN) par l'intervalle graduel [-c₁ -c₁ -c₂ -c₃], l'angle de braquage étant qualifié de moyen négatif avec un degré de 1 lorsque sa valeur quantitative se trouve dans l'intervalle [-c₁ -c₂] et de moyen négatif avec un degré dégressif sur l'intervalle [-c₂ -c₃],
- un angle de braquage faible négatif (BFN) par l'intervalle graduel [-c₂ -c₃ 0], l'angle de braquage étant qualifié de faible négatif avec un degré progressif lorsque sa valeur quantitative se trouve dans l'intervalle [-c₂ -c₃] et de faible négatif avec un degré dégressif sur l'intervalle [-c₃ 0],
- un angle de braquage nul (BZ) par l'intervalle graduel [-c₃ 0 c₃], l'angle de braquage étant qualifié de nul avec un degré progressif lorsque sa valeur quantitative se trouve dans l'intervalle [-c₃ 0] et de nul avec un degré dégressif sur l'intervalle [0 c₃],
- un angle de braquage faible positif (BFP) par l'intervalle graduel [0 c₃ c₂], l'angle de braquage étant qualifié de faible positif avec un degré progressif lorsque sa valeur quantitative se trouve dans l'intervalle [0 c₃] et de faible positif avec un degré dégressif sur l'intervalle [C₃ C₂],
- un angle de braquage moyen positif (BMP) par l'intervalle graduel [c₃ c₂ c₁ c₁], l'angle de braquage étant qualifié de moyen positif avec un degré de 1 lorsque sa valeur quantitative se trouve dans l'intervalle [c₂ c₁] et de moyen positif avec un degré progressif sur l'intervalle [c₃ c₂].

Les valeurs quantitatives c₁, c₂ et c₃ sont sans dimension et correspondent à des valeurs relatives à l'angle de braquage maximal du véhicule. Par conséquent ces valeurs sont comprises dans l'intervalle [-1 1] une valeur de -1, respectivement 1, correspond au braquage maximal des roues vers la gauche, respectivement vers la droite.

Pour traiter et décider de ces valeurs qualitatives sur le braquage relatif des roues qui permet de réaliser le positionnement latéral dans l'opération de placement, on utilise des tableaux présentés à la figure 10d, que l'on appelle "hyper rectangle de décision du contrôleur de position latérale".

Dans le cas du positionnement latéral, cet hyper rectangle de décision du contrôleur de position latérale est un tableau de règles qualitatives qui, à partir des quatre entrées, deux entrées quantitatives (le résultat du test 1 et sens de marche) et deux entrées qualitatives graduelles (cap et dlatavr), détermine une valeur de sortie du braquage relatif des roues qui est ici une valeur qualitative graduelle.

Par exemple, pour la valeur x du cap du véhicule (cap) mesurée-par les capteurs, on obtient avec le graphe de la figure 10a deux valeurs qualitatives graduelles y₁ cap nul et y₂ cap positif avec y₁ et y₂ comprises entre 0 et 1. Pour la valeur quantitative x' de la distance latérale relative (dlatavr), on obtient avec le graphe de la figure 10b deux valeurs qualitatives graduelles y'₁ distance nulle et y'₂ distance positive avec y'₁ et y'₂ comprises entre 0 et 1.

Ensuite, si le test 1 est non validé et le sens de marche est marche avant, alors on fait appel à l'hyper rectangle de décision du contrôleur de position latérale de la figure 10d qui permet d'obtenir une ou plusieurs valeurs qualitatives graduelles de la sortie angle de braquage relatif

Pour un cap nul (CZ) et une distance nulle (DZ). on obtient alors un braquage nul (BZ) que l'on pondère par un coefficient dépendant des valeurs de y₁ et y'₁.

Pour un cap positif (CP) et une distance nulle (DZ), on obtient un braquage moyen négatif (BMN) que l'on pondère par un coefficient dépendant des valeurs de y₂ et y'₁.

Pour un cap nul (CZ) et une distance positive (DP), on obtient un braquage faible négatif (BFN) que l'on pondère par un coefficient dépendant des valeurs de y₁ et y'₂.

Pour un cap positif (CP) et une distance positive(DP), on obtient un braquage moyen négatif (BMN) que l'on pondère par un coefficient dépendant des valeurs de y₂ et y'₂.

On obtient donc quatre valeurs qualitatives pour le braquage relatif des roues, à savoir Z₁ braquage nul, Z₂ braquage moyen négatif, Z₃ braquage faible négatif, Z₄ braquage moyen négatif, où Z₁, Z₂, Z₃ et Z₄ sont quatre valeurs comprises entre 0 et 1 qui dépendent de deux coefficients parmi y₁, y'₁, y₂ et y'₂.

A partir de ces quatre valeurs qualitatives graduelles obtenues pour le braquage relatif des roues, on en déduit alors une seule et unique valeur de sortie quantitative pour l'angle de braquage relatif des roues. Cette valeur quantitative de sortie du braquage relatif des roues est alors calculée par des méthodes mathématiques comme par exemple par la méthode barycentrique.

De même, si le test est non validé et que le sens de marche est marche arrière, alors on obtient pour les valeurs x du cap et x' de la distance latérale relative (dlatavr) des figures 10a et 10b quatre valeurs qualitatives graduelles pour la sortie braquage relatif des roues à partir de l'hyper rectangle de décision du contrôleur de position latérale présenté à la figure 10d, à savoir :
- pour un cap positif (CP) et une distance nulle (DZ), on obtient une valeur qualitative braquage moyen positif (BMP) que l'on pondère par un coefficient dépendant des valeurs de y₂ et y'₁,
- pour un cap nul (CZ) et une distance nulle (DZ), on obtient une valeur qualitative braquage nul (BZ) que l'on pondère par un coefficient dépendant de y₁ et y'₁,
- pour un cap nul (CZ) et une distance positive (DP), on obtient une valeur qualitative braquage faible positif (BFP) que l'on pondère par un coefficient dépendant de y₁ et y'₂,
- pour un cap positif (CP) et une distance positive (DP), on obtient une valeur qualitative braquage moyen positif (BMP) que l'on pondère par un coefficient dépendant de y₂ et y'₂.

De ces quatre valeurs qualitatives graduelles de braquage relatif des roues, à savoir Z'₁ braquage moyen positif, Z'₂ braquage nul, Z'₃ braquage faible positif et Z'₄ braquage moyen positif où Z'₁ Z'₂ Z'₃ Z'₄ sont quatre valeurs comprises entre 0 et 1 qui dépendent de deux coefficients parmi y₁, y'₁, y₂, y'₂, on en déduit ensuite une valeur quantitative de l'angle de braquage des roues que l'on détermine à partir d'un calcul mathématique de projection par exemple du type calcul barycentrique.

Dans le cas où le test 1 est validé ou que le sens de marche est point mort, alors la consigne de braquage est braquage nul (BZ). On en déduit une valeur quantitative de l'angle de braquage des roues par un calcul de projection par exemple de type calcul barycentrique.

Pour traiter et décider des consignes d'action de sortie pour le placement longitudinal de l'opération de placement, pour l'opération de braquage, l'opération de contre-braquage et l'opération de remise en ligne, on définit également des hyper rectangles de décision.

Pour le placement longitudinal, il s'agit d'un hyper rectangle de décision du contrôleur longitudinal qui dispose de trois entrées, à savoir le résultat du test 1, le sens de marche et la distance longitudinale relative (dlavr) et de deux sorties à savoir la vitesse et le sens de marche.

Pour l'opération de braquage, il s'agit d'un hyper rectangle de décision du contrôleur de braquage qui dispose de trois entrées, à savoir le résultat du test 2, le cap du véhicule et la distance droite arrière (ddar), et de trois sorties à savoir le braquage relatif des roues, la vitesse et le sens de marche.

Pour l'opération de contre-braquage, il s'agit d'un hyper rectangle de décision du contrôleur de contre-braquage qui dispose de quatre entrées, à savoir le résultat du test 3, le sens de marche, le cap du véhicule et la distance par rapport au véhicule arrière (dar), et de trois sorties à savoir le braquage relatif des roues, le sens de marche et la vitesse.

Pour l'opération de remise en ligne, il s'agit d'un hyper rectangle de décision du contrôleur de remise en ligne qui dispose de quatre entrées, à savoir le résultat du test 4, le sens de marche, la distance par rapport au véhicule arrière (dar) et la distance par rapport au véhicule avant (dav), et de trois sorties que sont la vitesse, le sens de marche et le braquage relatif des roues.

Les figures 8 et 9 permettent d'expliquer le dispositif (39) pour la mise en oeuvre du procédé de prise en charge du parcage en créneau. Ce dispositif (39) est implanté directement sur le véhicule (1).

Pour récupérer les mesures des données d'entrée, les capteurs (36) sont implantés sur le véhicule.

Pour obtenir les différentes mesures de distance qui ont été définies précédemment. le véhicule (1) est équipé de capteurs par exemple de type télémètre infrarouge, ultrasons ou laser. De même, le véhicule est équipé de capteurs de type gyromètre qui permettent de mesurer l'orientation du véhicule, c'est à dire le cap du véhicule. Pour récupérer le sens de marche et la vitesse du véhicule, celui-ci est équipé par exemple de capteurs tachymétriques ou de capteurs de vitesse de roue du type de ceux utilisés par les systèmes ABS.

Les capteurs de distance (36) du type infra-rouge, ultrasons ou laser sont par exemple implantés sur le véhicule tels que présentés à la figure 8, c'est à dire à l'avant (8) gauche et droit, à l'arrière (7) gauche et droit et sur les côtés latéraux avant (37) et arrière (38).

Ces capteurs sont implantés dans un mode préférentiel mais non limitatif à mi-hauteur sur le véhicule afin de détecter l'ensemble des obstacles tels que les autres véhicules, les bordures de trottoir et les murs, et ils doivent également avoir dans un mode préférentiel mais non limitatif un cône de détection permettant de percevoir en trois dimensions.

Les données d'entrée obtenues au moyen des capteurs de mesure sont ensuite transmises à un calculateur de bord (42) sur le véhicule (1). Pour cela, le dispositif dispose d'une interface d'entrée (40) qui récupère les signaux des capteurs, les traite et transmet ensuite au calculateur de bord les informations sur les mesures quantitatives des entrées du système.

Le calculateur de bord (42) comprend un programme informatique qui transforme certaines des données d'entrée quantitatives en données d'entrée qualitatives graduelles, en particulier les mesures des distances et d'orientation. Le calculateur de bord effectue également les différents tests à savoir le test 1, le test 2, le test 3, le test 4, le test 5 et les tests de sécurité 1 et 2. Il gère également les programmes informatiques permettant de traiter et décider des consignes d'action pour chacune des opérations de placement, de braquage, de contre-braquage et de remise en ligne. Pour cela, le programme informatique comprend les différentes règles qualitatives de chacun des hyper rectangles de décision qui permettent de traiter et décider les consignes d'action de sortie.

Une fois que le calculateur a décidé des consignes d'action de sortie, celles-ci sont traitées par une interface de sortie (41) qui transforme les informations de sortie du calculateur en signaux de commande à destination des actionneurs du véhicule contrôlant la vitesse, le sens de marche et le braquage relatif des roues. Pour cela, le calculateur transforme la consigne de sortie qualitative graduelle du braquage relatif des roues en valeur quantitative.

Pour contrôler la vitesse, le dispositif utilise dans un mode préférentiel mais non limitatif un actionneur qui commande l'angle d'ouverture des papillons de gaz qui règlent le débit de mélange gazeux dans les cylindres dans le cas d'un moteur à explosion et un actionneur qui commande le système de freinage. Dans le cas d'un moteur électrique, on contrôlera par exemple l'amplitude de la tension d'alimentation du moteur.

Pour contrôler le sens de marche du véhicule, le dispositif dispose dans un mode préférentiel mais non limitatif d'une boîte de vitesse de type boîte de vitesse automatique ou boîte de vitesse robotisée qui permet d'actionner le sens de marche avant ou le sens de marche arrière selon le rapport marche avant marche arrière choisi par l'opérateur. Dans le cas où le moteur est de type électrique, le dispositif peut alors agir directement sur le signe du signal du courant électrique qui commande le sens de rotation dudit moteur selon le sens de marche choisi par l'opérateur.

En ce qui concerne le contrôle de l'angle de braquage relatif des roues, le dispositif agit dans un mode préférentiel mais non limitatif directement sur le moteur couple qui contrôle la colonne de direction du véhicule et donc l'angle de braquage des roues, ou sur le ou les moteurs qui contrôlent le braquage des roues dans le cas d'une direction électrique sans colonne.

Dans un autre mode de réalisation, le dispositif utilise une interface visuelle et/ou sonore et/ou kinesthésique qui informe directement l'opérateur sur les manoeuvres à effectuer pour parquer le véhicule. Dans ce cas, les actionneurs sont directement les mains et les pieds de l'opérateur qui agissent sur le volant, la boîte de vitesse, la pédale d'accélérateur, de frein et d'embrayage.

L'interface visuelle et/ou sonore et/ou kinesthésique informe alors l'opérateur en cours d'évolution de la manoeuvre sur les actions qu'il doit effectuer sur le volant, la boîte de vitesse, la pédale d'accélérateur, de frein et d'embrayage pour pouvoir parquer le véhicule en créneau. Par exemple, l'interface visuelle peut être équipée d'un écran, d'une boîte vocale ou de moyen de vibration du volant qui indique à l'opérateur de commencer et/ou de terminer la manoeuvre de parcage. Cette interface visuelle et/ou sonore et/ou kinesthésique peut être implantée sur le véhicule afin de sécuriser l'opérateur qui préfère être informé par l'ordinateur de bord et agir par lui-même sur le véhicule pour le parquer en créneau plutôt que se laisser guider automatiquement.

Dans le cas où l'on informe visuellement et/ou auditivement et/ou kinesthésiquement l'opérateur des commandes à effectuer sur le véhicule, ledit véhicule est alors, dans un mode préférentiel mais non limitatif, équipé de moyens de limitation des actions du conducteur qui permettent d'éviter les fausses manoeuvres lorsque celui-ci agit sur les organes de commande tels que le volant, la boîte de vitesse, les pédales d'accélérateur, de frein et d'embrayage. Ainsi l'opérateur a le contrôle du véhicule dans la limite où il n'effectue pas d'erreur de manoeuvre, dans le cas contraire les moyens de limitation vont l'informer de ses fausses manoeuvres en limitant par exemple la rotation du volant ou le braquage des roues ou encore la vitesse du véhicule.

## Revendications

1. Procédé de prise en charge du parcage en créneau d'un véhicule (1) mobile utilisable pour parquer tout type de véhicule motorisé, dont on peut braquer les roues d'un même essieu, par rapport à l'environnement voisin (3) pouvant se trouver sur la voie publique, les parkings privés et les sites de production des entreprises, ledit parcage (15) en créneau se composant d'au moins deux phases à savoir une phase de braquage (23, 25) et une phase de contre-braquage (26, 27), et éventuellement de deux autres phases, à savoir une phase de placement (19, 22) qui précède les deux phases de braquage et contre braquage et une phase de remise en ligne (28, 29) qui suit la phase de contre-braquage, ledit procédé utilisant des capteurs (36) de mesure de distance, d'orientation et de vitesse qui permettent d'évaluer (10) la place disponible (2) par rapport à l'environnement voisin (3) pour effectuer la manoeuvre de parcage, celle-ci se faisant par action sur la vitesse, le sens de marche et le braquage relatif des roues du véhicule,
**caractérisé par le fait que** pour réaliser le parcage (15) :
- on récupère les données d'entrée provenant des capteurs (36) de mesure qui fournissent des valeurs quantitatives,
- on traduit certaines de ces valeurs d'entrée quantitatives en valeurs d'entrée qualitatives graduelles,
- on décide sur la base de règles qualitatives des consignes d'action qui fournissent des données de sortie qualitatives graduelles et des données de sortie quantitatives,
- on transforme ces données de sortie qualitatives graduelles en données de sortie quantitatives,
- on commande les actionneurs du véhicule (1) en fonction des données de sortie quantitatives obtenues.

2. Procédé de prise en charge du parcage en créneau d'un véhicule (1) mobile, selon la revendication 1, **caractérisé par le fait qu'**on effectue l'opération de parcage (15) en créneau, en temps réel, en récupérant les données d'entrée des capteurs (36) à chaque instant et en commandant les actionneurs également à chaque instant durant toute l'évolution de la manoeuvre.

3. Procédé de prise en charge du parcage en créneau d'un véhicule (1) mobile, selon la revendication 1, **caractérisé par le fait qu'**on réalise la première phase de placement en gérant la position latérale du véhicule par rapport aux obstacles voisins, et pour cela :
- on contrôle la position latérale du véhicule sur la base de quatre données de mesure des capteurs, deux données quantitatives que sont le sens de marche et un résultat d'un premier test (test 1), et deux données qualitatives graduelles que sont le cap du véhicule (1) et la distance latérale relative (dlatavr) par rapport à la consigne de position latérale,
- on traite et on décide de la consigne d'action du braquage (4) relatif des roues qui prend une valeur qualitative graduelle que l'on transforme en valeur quantitative, la décision de la. consigne d'action se faisant en utilisant des règles qualitatives de décision du contrôleur de position latérale,
- on agit sur le braquage des roues en fonction des consignes obtenues.

4. Procédé de prise en charge du parcage en créneau d'un véhicule (1) mobile, selon la revendication 1, **caractérisé par le fait qu'**on réalise la première phase de placement (19, 22) en gérant, parallèlement à la position latérale, la position longitudinale du véhicule par rapport aux obstacles voisins (3), et pour cela :
- on contrôle la position longitudinale du véhicule par rapport aux obstacles voisins sur la base de trois données de mesure des capteurs, deux données quantitatives que sont le résultat du premier test (test 1) et le sens de marche, et une donnée qualitative graduelle qui est la distance longitudinale relative (dlavr) par rapport à la consigne de position longitudinale,
- on traite et on décide de deux consignes de sortie quantitatives que sont la vitesse et le sens de marche en utilisant des règles qualitatives de décision du contrôleur de position longitudinale,
- on agit sur la vitesse et le sens de marche en fonction des consignes obtenues.

5. Procédé de prise en charge du parcage en créneau d'un véhicule (1) mobile, selon la revendication 1, **caractérisé par le fait qu'**on réalise la seconde phase de braquage (23, 25) du véhicule une fois la première phase de placement (19, 22) achevée, et pour cela :
- on contrôle le braquage sur la base de trois données de mesure des capteurs (36), deux données qualitatives graduelles que sont le cap du véhicule et la distance droite arrière (ddar) par rapport au bord de la zone de parcage et une donnée quantitative qui est le résultat d'un second test (test 2),
- on traite et on décide de trois consignes de sortie, deux sorties quantitatives que sont la consigne de vitesse et la consigne de sens de marche et une sortie qualitative graduelle qui est le braquage relatif des roues, en utilisant des règles qualitatives de décision du contrôleur de braquage,
- on transforme la sortie qualitative graduelle en sortie quantitative, on agit sur le braquage des roues, la vitesse et le sens de marche du véhicule en fonction des consignes obtenues.

6. Procédé de prise en charge du parcage en créneau d'un véhicule (1) mobile, selon la revendication 1, **caractérisé par le fait qu'**on réalise la troisième phase de contre-braquage (26, 27) une fois la seconde phase de braquage (23, 25) achevée, et pour cela :
- on contrôle le contre-braquage des roues sur la base de quatre données de mesure des capteurs (36), deux données quantitatives que sont le résultat d'un troisième test (test 3) et le sens de marche, et deux données qualitatives graduelles que sont le cap du véhicule et la distance au véhicule arrière (dar),
- on traite et décide alors de trois consignes de sortie, deux sorties quantitatives que sont la vitesse et le sens de marche du véhicule et une sortie qualitative graduelle qu'est le braquage relatif des roues, en utilisant des règles qualitatives de décision de contre braquage,
- on transforme la sortie qualitative graduelle en sortie quantitative,
- on agit alors sur le braquage des roues, la vitesse et le sens de marche du véhicule en fonction des consignes obtenues.

7. Procédé de prise en charge du parcage en créneau d'un véhicule (1) mobile, selon la revendication 1, **caractérisé par le fait qu'**on réalise la quatrième phase de remise en ligne (28, 29) du véhicule une fois la troisième phase de contre-braquage (26, 27) achevée, et pour cela :
- on contrôle la remise en ligne sur la base de cinq données de mesure des capteurs (36), deux données quantitatives que sont le résultat d'un quatrième test (test 4) et le sens de marche du véhicule et trois données qualitatives graduelles que sont la distance au véhicule arrière (dar), la distance au véhicule avant (dav) et le cap du véhicule,
- on traite et on décide de trois consignes de sortie, deux sorties quantitatives que sont la vitesse et le sens de marche du véhicule et une sortie qualitative graduelle qui est le braquage relatif des roues, en utilisant des règles qualitatives de décision du contrôleur longitudinal et du contrôleur latéral de remise en ligne,
- on transforme la sortie qualitative graduelle en sortie quantitative,
- on agit alors sur le braquage des roues, le sens de marche et la vitesse du véhicule en fonction des consignes obtenues.

8. Procédé de prise en charge du parcage en créneau d'un véhicule (1) mobile, selon les revendications 1 et 7, **caractérisé par le fait que**, lorsque la phase de remise en ligne (28, 29) est terminée, on effectue un cinquième test (test 5) (30) de validation du parcage (15) et :
- si le test est validé, on achève le parcage (15),
- si le test est non validé, on recommence la phase de braquage (23, 25), de contre-braquage (26, 27) et de remise en ligne (28, 29).

9. Procédé de prise en charge du parcage en créneau d'un véhicule (1) mobile, selon la revendication 1, **caractérisé par le fait qu'**on effectue en parallèle deux tests de sécurité (31, 32) en cours de réalisation des quatre phases de parcage :
- pour le premier test de sécurité (31), on vérifie que l'opérateur n'effectue aucune action sur les organes de commande du véhicule (1),
- pour le second test de sécurité (32), on vérifie la distance au véhicule avant (dav) et la distance au véhicule arrière (dar) pour s'assurer que les obstacles environnants (3) ne sont pas modifiés,
- si le test de sécurité 1 (31) est non validé, alors on effectue un arrêt (33) transitoire du véhicule, suivi d'un test d'arrêt (34) de la manoeuvre,
- si le test d'arrêt (34) est ensuite validé par le conducteur, on arrête (35) complètement la manoeuvre du parcage (15),
- et en parallèle si le test de sécurité 2 (32) est validé, on arrête (35) complètement la manoeuvre du parcage,
- sinon on continue la manoeuvre.

10. Dispositif (39) pour la prise en charge du parcage en créneau d'un véhicule (1) mobile qui met en oeuvre le procédé de la revendication 1, **caractérisé par le fait qu'**il comprend :
- des capteurs (36) de mesure de distance du véhicule (1) par rapport aux obstacles (3) environnants, des capteurs de vitesse, des capteurs de sens de marche et des capteurs d'orientation du véhicule,
- un calculateur (42) qui récupère les données quantitatives des capteurs de mesure et transforme les données d'entrée en valeurs qualitatives graduelles et en valeurs quantitatives, traite et décide des consignes de sortie qui ont des valeurs qualitatives graduelles et des valeurs quantitatives et transforme ces consignes de sortie en valeurs quantitatives,
- des actionneurs qui agissent sur les mouvements du véhicule(1) en fonction des valeurs de sortie quantitatives transmises par le calculateur (42) ou une interface de sortie (41) qui transmet des informations visuelles et/ou sonores et/ou kinesthésiques au conducteur pour le guider dans sa manoeuvre.

## Claims

1. Method for managing the slot parking of a mobile vehicle (1) which can be used to park any type of motorized vehicle, the wheels of a common axle of which can be locked, with respect to the immediate surroundings (3) which may be found on public roads, private parking lots and production sites of enterprises, the said slot parking (15) consisting of at least two phases, namely a locking phase (23, 25) and a reverse-locking phase (26, 27), and possibly of two other phases, namely a positioning phase (19, 22) which precedes the two locking and reverse-locking phases and a realignment phase (28, 29) which follows the reverse-locking phase, the said method using measurement sensors (36) for measuring distance, orientation and speed which make it possible to evaluate (10) the space available (2) with respect to the immediate surroundings (3) so as to perform the parking manoeuvre, the latter being carried out by operating on the speed, the direction of travel and the relative lock of the wheels of the vehicle,
**characterized in that**, in order to carry out parking (15):
- the input data originating from the measurement sensors (36) which provide quantitative values are retrieved,
- some of these quantitative input values are translated into gradual qualitative input values,
- on the basis of qualitative rules, operating instructions are determined which provide gradual qualitative output data and quantitative output data,
- these gradual qualitative output data are transformed into quantitative output data,
- the actuators of the vehicle (1) are controlled as a function of the quantitative output data obtained.

2. Method for managing the slot parking of a mobile vehicle (1), according to Claim 1, **characterized in that** the slot parking operation (15) is performed in real time by retrieving the input data from the sensors (36) at each instant and by controlling the actuators also at each instant during the entire progress of the manoeuvre.

3. Method for managing the slot parking of a mobile vehicle (1), according to Claim 1, **characterized in that** the first positioning phase is carried out by administering the lateral position of the vehicle with respect to immediate obstacles, and to do this:
- the lateral position of the vehicle is monitored on the basis of four measurement data from the sensors, two quantitative data, viz the direction of travel and a result of a first test (test 1), and two gradual qualitative data, viz the heading of the vehicle (1) and the relative lateral distance (dlatavr) with respect to the lateral position instruction,
- the operating instruction for the relative lock (4) of the wheels which takes a gradual qualitative value which is transformed into a quantitative value is processed and determined, the determination of the operating instruction being effected using qualitative rules of determination of the lateral position monitor,
- the wheel lock is acted upon as a function of the instructions obtained.

4. Method for managing the slot parking of a mobile vehicle (1), according to Claim 1, **characterized in that** the first positioning phase (19, 22) is carried out by administering, in parallel with the lateral position, the longitudinal position of the vehicle with respect to immediate obstacles (3), and to do this:
- the longitudinal position of the vehicle with respect to immediate obstacles is monitored on the basis of three measurement data from the sensors, two quantitative data, viz the result of the first test (test 1) and the direction of travel, and a gradual qualitative data item which is the relative longitudinal distance (dlavr) with respect to the longitudinal position instruction,
- two quantitative output instructions, viz the speed and the direction of travel, are processed and determined using qualitative rules of determination of the longitudinal position monitor,
- the speed and the direction of travel are acted upon as a function of the instructions obtained.

5. Method for managing the slot parking of a mobile vehicle (1), according to Claim 1, **characterized in that** the second locking phase (23, 25) of the vehicle is carried out once the first positioning phase (19, 22) is concluded, and to do this:
- the lock is monitored on the basis of three measurement data from the sensors (36), two gradual qualitative data, viz the heading of the vehicle and the back right distance (ddar) with respect to the edge of the parking zone and a quantitative data item which is the result of a second test (test 2),
- three output instructions, two quantitative outputs, viz the speed instruction and the direction of travel instruction, and a gradual qualitative output which is the relative lock of the wheels, are processed and determined using qualitative rules of determination of the lock monitor,
- the gradual qualitative output is transformed into a quantitative output, the wheel lock, the speed and the direction of travel of the vehicle are acted upon as a function of the instructions obtained.

6. Method for managing the slot parking of a mobile vehicle (1), according to Claim 1, **characterized in that** the third reverse-locking phase (26, 27) is carried out once the second locking phase (23, 25) is concluded, and to do this:
- the reverse-lock of the wheels is monitored on the basis of four measurement data from the sensors (36), two quantitative data, viz the result of a third test (test 3) and the direction of travel, and two gradual qualitative data, viz the heading of the vehicle and the distance to the back vehicle (dar),
- three output instructions, two quantitative outputs, viz the speed and the direction of travel of the vehicle, and a gradual qualitative output, viz the relative lock of the wheels, are then processed and determined using qualitative rules of determination of reverse lock,
- the gradual qualitative output is transformed into a quantitative output,
- the wheel lock, the speed and the direction of travel of the vehicle are then acted upon as a function of the instructions obtained.

7. Method for managing the slot parking of a mobile vehicle (1), according to Claim 1, **characterized in that** the fourth phase of realignment (28, 29) of the vehicle is carried out once the third reverse-locking phase (26, 27) is concluded, and to do this:
- the realignment is monitored on the basis of five measurement data from the sensors (36), two quantitative data, viz the result of a fourth test (test 4) and the direction of travel of the vehicle, and three gradual qualitative data, viz the distance to the back vehicle (dar), the distance to the front vehicle (dav) and the heading of the vehicle,
- three output instructions, two quantitative outputs, viz the speed and the direction of travel of the vehicle, and a gradual qualitative output which is the relative lock of the wheels, are processed and determined using qualitative rules of determination of the longitudinal monitor and of the lateral monitor of realignment,
- the gradual qualitative output is transformed into a quantitative output,
- the wheel lock, the direction of travel and the speed of the vehicle are then acted upon as a function of the instructions obtained.

8. Method for managing the slot parking of a mobile vehicle (1), according to Claims 1 and 7, **characterized in that**, when the realignment phase (28, 29) has terminated, a fifth test (test 5) (30) for validating the parking (15) is performed and:
- if the test is validated, the parking (15) is concluded,
- if the test is non validated, the locking phase (23, 25), reverse-locking phase (26, 27) and realignment phase (28, 29) is repeated.

9. Method for managing the slot parking of a mobile vehicle (1), according to Claim 1, **characterized in that** two safety tests (31, 32) are performed in parallel while carrying out the four parking phases:
- for the first safety test (31), a check verifies that the operator performs no action on the control members of the vehicle (1),
- for the second safety test (32), a check verifies the distance to the front vehicle (dav) and the distance to the back vehicle (dar) so as to ensure that the surrounding obstacles (3) are not modified,
- if the safety test 1 (31) is not validated, then a transient halting (33) of the vehicle is performed, followed by a test of halting (34) of the manoeuvre,
- if the test of halting (34) is then validated by the driver, the parking (15) manoeuvre is completely halted (35),
- and in parallel if the safety test 2 (32) is validated, the parking manoeuvre is completely halted (35),
- otherwise the manoeuvre is continued.

10. Device (39) for managing the slot parking of a mobile vehicle (1), which implements the method of Claim 1, **characterized in that** it comprises:
- measurement sensors (36) for measuring the distance of the vehicle (1) with respect to surrounding obstacles (3), speeds sensors, direction of travel sensors and vehicle orientation sensors,
- a computer (42) which retrieves the quantitative data from the measurement sensors and transforms the input data into gradual qualitative values and into quantitative values, processes and determines output instructions which have gradual qualitative values and quantitative values and transforms these output instructions into quantitative values,
- actuators which act on the movements of the vehicle (1) as a function of the quantitative output values transmitted by the computer (42) or an output interface (41) which transmits visual and/or audible and/or kinesthetic information to the driver to guide him in his manoeuvre.

## Patentansprüche

1. Verfahren zur Durchführung des Einparkens eines mobilen Fahrzeugs (1) in eine Parklücke, das zum Einparken eines motorisierten Fahrzeugs jeglicher Bauart verwendbar ist, bei dem sich die Räder derselben Radachse lenken lassen, in Bezug auf eine benachbarte Umgebung (3), die sich auf einer öffentlichen Straße, auf privaten Parkplätzen und in Produktionsstätten von Unternehmen befinden kann, wobei zu dem Einparken (15) in eine Parklücke wenigstens zwei Phasen, nämlich eine Phase des Einlenkens (23, 25) und eine Phase des Gegenlenkens (26, 27), sowie eventuell zwei weitere Phasen gehören, nämlich eine Positionierphase (19, 22), die den beiden Phasen des Einlenkens und Gegenlenkens vorausgeht, sowie eine Phase des geradlinigen Wiederausrichtens (28, 29), die der Gegenlenkphase nachgeschaltet ist, wobei das Verfahren Sensoren (36) zur Erfassung des Abstands, der Ausrichtung und der Geschwindigkeit verwendet, die es ermöglichen, die verfügbare Platzgröße (2) in Bezug auf die benachbarte Umgebung (3) zu bestimmen (10), um das Einparkmanöver auszuführen, wobei sich dieses durch Einwirkung auf die Geschwindigkeit, die Fahrtrichtung und die relative Auslenkung der Fahrzeugräder ausführen lässt,
**dadurch gekennzeichnet, dass** zur Verwirklichung des Einparkens (15):
- Eingangsdaten entgegengenommen werden, die von den Messsensoren (36) ausgegeben werden, die quantitative Werte liefern,
- bestimmte dieser quantitativen Eingangswerte in graduelle qualitative Eingangswerte umgesetzt werden,
- auf der Grundlage qualitativer Regeln Aktionsgrößen bestimmt werden, die graduelle qualitative Ausgangsdaten und quantitative Ausgangsdaten ergeben,
- diese graduelle qualitative Ausgangsdaten in quantitative Ausgangsdaten gewandelt werden,
- die Aktuatoren des Fahrzeugs (1) in Abhängigkeit von den erhaltenen quantitativen Ausgangsdaten betätigt werden.

2. Verfahren zur Durchführung des Einparkens eines mobilen Fahrzeugs (1) in eine Parklücke nach Anspruch 1, **dadurch gekennzeichnet, dass** der Einparkvorgang (15) in eine Parklücke in Echtzeit durchgeführt wird, indem die Eingangsdaten der Sensoren (36) zu jedem Zeitpunkt wiedergewonnen und die Aktuatoren ebenfalls zu jedem Zeitpunkt während des gesamten fortgesetzten Manövers betätigt werden.

3. Verfahren zur Durchführung des Einparkens eines mobilen Fahrzeugs (1) in eine Parklücke nach Anspruch 1, **dadurch gekennzeichnet, dass** die erste Phase des Positionierens durch Führen der seitlichen Stellung des Fahrzeugs in Bezug auf benachbarte Hindernisse verwirklicht wird und dafür:
- die seitliche Stellung des Fahrzeugs auf der Grundlage von vier Messdaten der Sensoren überwacht wird, zweier quantitativer Daten, die die Fahrtrichtung und ein Ergebnis eines ersten Tests (Test 1) angeben, sowie zweier gradueller qualitativer Daten, die den Kurs des Fahrzeugs (1) und den relativen seitlichen Abstand (dlatavr) in Bezug auf die Größe für die seitliche Stellung darstellen,
- eine Verarbeitung vorgenommen und die Aktionsgröße für das relative Auslenken (4) der Räder bestimmt wird, die einen graduellen qualitativen Wert annimmt, der in einen quantitativen Wert gewandelt wird, wobei die Bestimmung der Aktionsgröße unter Verwendung qualitativer Entscheidungsregeln der Steuerung für die seitliche Stellung vorgenommen wird,
- in Abhängigkeit von den erhaltenen Größen auf die Lenkung der Räder eingewirkt wird.

4. Verfahren zur Durchführung des Einparkens eines mobilen Fahrzeugs (1) in eine Parklücke nach Anspruch 1, **dadurch gekennzeichnet, dass** die erste Phase des Positionierens (19, 22) verwirklicht wird, indem parallel zu der seitlichen Stellung die Längstellung des Fahrzeugs in Bezug auf benachbarte Hindernisse (3) gesteuert wird, und zu diesem Zweck:
- die Längsstellung des Fahrzeugs in Bezug auf benachbarte Hindernisse auf der Grundlage von drei Messdaten der Sensoren überwacht wird, zweier quantitativer Daten, die das Ergebnis des ersten Tests (Test 1) und die Fahrtrichtung darstellen, und eines graduellen qualitativen Datums, dass den relativen Abstand in Längsrichtung (dlavr) in Bezug auf die Größe für die Längsstellung angibt,
- zwei quantitative Ausgangsgrößen, die die Geschwindigkeit und die Fahrtrichtung betreffen, durch Verarbeitung und Entscheidung bestimmt werden, indem qualitative Entscheidungsregeln der Steuerung der Längsstellung verwendet werden,
- auf die Geschwindigkeit und die Fahrtrichtung in Abhängigkeit von den erhaltenen Größen eingewirkt wird.

5. Verfahren zur Durchführung des Einparkens eines mobilen Fahrzeugs (1) in eine Parklücke nach Anspruch 1, **dadurch gekennzeichnet, dass** die zweite Phase des Einlenkens (23, 25) des Fahrzeugs verwirklicht wird, sobald die erste Phase des Positionierens (19, 22) beendet ist, und zu diesem Zweck:
- das Einlenken auf der Grundlage von drei Messdaten der Sensoren (36) überwacht wird, zweier gradueller qualitativer Daten, die den Kurs des Fahrzeugs und den hinteren senkrechten Abstand (ddar) in Bezug auf einen Rand der Parkzone angeben, sowie eines quantitativen Datums, das das Ergebnis eines zweiten Tests (Test 2) darstellt,
- eine Verarbeitung vorgenommen wird und drei Ausgangsgrößen bestimmt werden, zwei quantitative Ausgangsgrößen, die die Größe für die Geschwindigkeit und die Größe für die Fahrtrichtung bilden, sowie eine graduelle qualitative Ausgangsgröße, die die relative Auslenkung der Räder angibt, wobei dafür qualitative Entscheidungsregeln der Steuerung des Einlenken verwendet werden,
- die graduelle qualitative Ausgangsgröße in eine quantitative Ausgangsgröße gewandelt wird, (und) auf das Lenken der Räder, die Fahrgeschwindigkeit und die Fahrtrichtung des Fahrzeugs in Abhängigkeit von den erhaltenen Größen eingewirkt wird.

6. Verfahren zur Durchführung des Einparkens eines mobilen Fahrzeugs (1) in eine Parklücke nach Anspruch 1, **dadurch gekennzeichnet, dass** die dritte Phase des Gegenlenkens (26, 27) verwirklicht wird, sobald die zweite Phase des Einlenkens (23, 25) beendet ist, und zu diesem Zweck:
- das Gegenlenken der Räder auf der Grundlage von vier Messdaten der Sensoren (36) überwacht wird, zweier quantitativer Daten, die das Ergebnis eines dritten Tests (Test 3) und die Fahrtrichtung angeben, sowie zweier gradueller qualitativer Daten, die den Kurs des Fahrzeugs und den Abstand zum hinteren Fahrzeug (dar) angeben,
- anschließend drei Ausgangsgrößen verarbeitet und bestimmt werden, zwei quantitative Ausgangsgrößen, die die Geschwindigkeit und die Fahrtrichtung des Fahrzeugs darstellen, sowie eine graduelle qualitative Ausgangsgröße, die die relative Auslenkung der Räder angibt, indem qualitative Entscheidungsregeln für das Gegenlenken verwendet werden,
- die graduelle qualitative Ausgangsgröße in eine quantitative Ausgangsgröße gewandelt wird,
- anschließend auf das Lenken der Räder, die Fahrtgeschwindigkeit und Fahrtrichtung des Fahrzeugs in Abhängigkeit von den erhaltenen Größen eingewirkt wird.

7. Verfahren zur Durchführung des Einparkens eines mobilen Fahrzeugs (1) in eine Parklücke nach Anspruch 1, **dadurch gekennzeichnet, dass** die vierte Phase des Wiederausrichtens des Fahrzeugs in eine Linie (28, 29) verwirklicht wird, sobald die dritte Phase des Gegenlenkens (26, 27) beendet ist, und zu diesem Zweck:
- das geradlinige Widerausrichten auf der Grundlage von fünf Messdaten der Sensoren (36) überwacht wird, zweier quantitativer Daten, die das Ergebnis eines vierten Tests (Test 4) und die Fahrtrichtung des Fahrzeugs darstellen, sowie dreier gradueller qualitativer Daten, die den Abstand zum hinteren Fahrzeug (dar), den Abstand zum vorderen Fahrzeug (dav) und den Kurs des Fahrzeugs angeben,
- drei Ausgangsgrößen verarbeitet und bestimmt werden, zwei quantitative Ausgangsgrößen, die die Fahrtgeschwindigkeit und die Fahrtrichtung des Fahrzeugs darstellen, sowie eine graduelle qualitative Ausgangsgröße, die die relative Auslenkung der Räder angibt, wobei dafür qualitative Entscheidungsregeln der Steuerung der Längsstellung und der Steuerung der seitlichen Stellung für das geradlinige Wiederausrichten verwendet werden,
- die graduelle qualitative Ausgangsgröße in eine quantitative Größe gewandelt wird,
- anschließend auf die Auslenkung der Räder, die Fahrtrichtung und die Geschwindigkeit des Fahrzeugs in Abhängigkeit von den erhaltenen Größen eingewirkt wird.

8. Verfahren zur Durchführung des Einparkens eines mobilen Fahrzeugs (1) in eine Parklücke nach Ansprüchen 1 und 7, **dadurch gekennzeichnet, dass**, sobald die Phase des Wiederausrichtens in eine Linie (28, 29) beendet ist, ein fünfter Test (Test 5) (30) zur Validierung des Einparkens (15) durchgeführt wird und
- falls der Test für gültig erklärt worden ist, das Einparken (15) beendet wird,
- falls der Test für nicht gültig erklärt worden ist, die Phase des Einlenkens (26, 25), Gegenlenkens (26, 27) und geradlinigen Wiederausrichtens (28, 29) wiederaufgenommen wird.

9. Verfahren zur Durchführung des Einparkens eines mobilen Fahrzeugs (1) in eine Parklücke nach Anspruch 1, **dadurch gekennzeichnet, dass** während der Verwirklichung der vier Einparkphasen zwei Sicherheitstests (31, 32) parallel zueinander durchgeführt werden, wobei:
- für den ersten Sicherheitstest (31) verifiziert wird, dass der Fahrzeugführer keine Aktionen auf die Betätigungsorgane des Fahrzeugs (1) ausführt,
- für den zweiten Sicherheitstest (32) der Abstand zum vorderen Fahrzeug (dav) und der Abstand zum hinteren Fahrzeug (dar) überprüft werden, um sicherzustellen, dass sich die Umgebungshindernisse (3) nicht verändern,
- falls der Sicherheitstest 1 (31) nicht gültig ist, anschließend ein vorübergehendes Anhalten des Fahrzeugs bewirkt wird, dem ein Test für das Abbrechen (34) des Manövers folgt,
- falls der Test für das Abbrechens (34) anschließend durch den Fahrzeugführer validiert worden ist, das Einparkmanöver (15) vollständig abgebrochen (35) wird,
- und, parallel dazu, falls der Sicherheitstest (2) (32) gültig ist, das Einparkmanöver vollständig abgebrochen (35) wird,
- ansonsten das Manöver fortgeführt wird.

10. Vorrichtung (39) zur Durchführung des Einparkens eines mobilen Fahrzeugs (1) in eine Parklücke, wobei die Vorrichtung das Verfahren nach Anspruch 1 anwendet, **dadurch gekennzeichnet, dass** sie aufweist:
- Sensoren (36) zur Erfassung des Abstands des Fahrzeugs (1) in Bezug auf Umgebungshindernisse (3), Geschwindigkeitssensoren, Sensoren für die Fahrtrichtung und Sensoren für die Ausrichtung des Fahrzeugs,
- eine Verarbeitungseinrichtung (42), die die quantitativen Daten der Messsensoren entgegennimmt und die Eingangsdaten in graduelle qualitative Werte und in quantitative Werte wandelt, eine Verarbeitung vornimmt und Ausgangsgrößen, die graduelle qualitative Werte und quantitative Werte aufweisen, bestimmt sowie diese Ausgangsgrößen in quantitative Werte wandelt,
- Aktuatoren, die auf die Bewegungen des Fahrzeugs (1) in Abhängigkeit von quantitativen Ausgangswerten einwirken, die durch die Verarbeitungseinrichtung (42) oder über eine Ausgangsschnittstelle (41) übertragen werden, die visuelle und/oder akkustische und/oder kinesthesische Informationen an den Fahrzeugführer übermittelt, um ihn bei seinem Manöver zu leiten.
